# EUROPÄISCHE PATENTANMELDUNG

(11) **EP 1 845 278 A1**
(43) Veröffentlichungstag der Anmeldung: **17.10.2007**
(21) Anmeldenummer: 07007546.0
(22) Anmeldetag: 12.04.2007
(51) Int. Cl.: F16F 9/05

(54) **Luftfeder, Positioniermodul und Positioniereinrichtung**

(30) Priorität: 12.04.2006 DE 102006017275
(71) Anmelder: Gudzulic, Miro, 83512 Wasserburg (DE)
(72) Erfinder: Gudzulic, Miro, 83512 Wasserburg (DE)
(74) Vertreter: Fischer, Matthias

(57) **Zusammenfassung**

Luftfeder mit integrierter Höhenmesseinrichtung, gekennzeichnet durch einen Druckraum oder Innenraum (25) der Luftfeder, einen außerhalb des Innenraums (25) angeordneten jedoch in den Innenraum (25) ausgerichteten analogen Näherungssensor (4) und eine im Innenraum (25) dem Näherungssensor (4) gegenüber angeordnete Metallplatte (8).

## Beschreibung

Die vorliegende Erfindung betrifft eine Luftfeder mit einer integrierten Höhenmesseinrichtung, sowie ein Positioniermodul, eine Positionsregeleinrichtung und einen Schwingungsisolator, in welchen die Luftfeder eingesetzt ist.

Aus dem Stand der Technik sind Luftfedern sowie Balgzylinder mit Sensoren und Magnetventilen bekannt. Aus der DE 198 93 750 As ist eine Vorrichtung mit einer integrierten Höhenmesseinrichtung für vollautomatische Gewichtseinstellung und Höhenmessung eines gefederten Personensitzes bekannt. Hierbei werden mechanische oder elektromechanische oder nach dem Ultraschallprinzip arbeitende Höhensensoren und Magnetventile sowie die Regelungseinrichtung hierfür außerhalb der Luftfeder eingesetzt. Der Nachteil von Ultraschallsensoren liegt neben dem Umstand, dass diese sehr teuer sind, in der Empfindlichkeit der Sensoren gegenüber Druck und Druckluftqualität (Feuchtigkeit, Temperatur- und Druckänderungen), welche im Druckraum der Luftfeder oder des Balgzylinders herrschen.

Der Nachteil von bekannten Mikrowellensensoren besteht darin, dass diese mit einem Boden und einem Deckel aus Metall versehen sein müssen, wobei beim Einsatz von Mikrowellensensoren in Luftfedern im Innenraum der Luftfedern ein Metallkäfig eingesetzt werden muss, um zu verhindern, dass Mikrowellen durch den Gummibalg der Luftfeder nach außen dringen.

Der Erfindung liegt die Aufgabe zugrunde, eine Luftfeder mit einer integrierten Höhenmesseinrichtung, sowie Vorrichtungen zum Einsatz von derartigen Luftfedern vorzuschlagen, bei denen die aus dem Stand der Technik bekannten Nachteile vermieden oder zumindest stark verringert werden.

Die Aufgabe wird gelöst mit einer Luftfeder gemäß Anspruch 1.

Die erfindungsgemäße Luftfeder mit integrierter Höhenmesseinrichtung ist gekennzeichnet durch einen Druckraum oder Innenraum der Luftfeder, einen außerhalb des Innenraums angeordneten jedoch in den Innenraum ausgerichteten analogen Näherungssensor und eine im Innenraum dem Näherungssensor gegenüber angeordnete Metallplatte. Hierdurch ergibt sich eine kompakte und von äußeren Einflüssen unabhängige schaltungssichere Einheit, welche aufgrund des eingesetzten, außerhalb des Innenraums und damit geschützt angeordneten, analogen Näherungssensors, welche mit der Metallplatte zusammenwirkt, auch gegenüber Druck und Druckluftqualität (Feuchtigkeit, Temperatur- und Druckänderungen), welche im Druckraum der Luftfeder oder des Balgzylinders herrschen, unempfindlich ist.

In einer vorteilhaften Weiterbildung der Erfindung sind der analoge Näherungssensor und die Metallplatte der Luftfeder im Abstand zueinander voreinstellbar ausgebildet. Damit lässt sich die erfindungsgemäße Luftfeder vorteilhafterweise auf die jeweiligen Anforderungen einstellen.

Die Aufgabe wird weiter gelöst mit einem Positioniermodul gemäß Anspruch 3.

Das erfindungsgemäße Positioniermodul ist gekennzeichnet durch eine Luftfeder gemäß Anspruch 1 oder 2, sowie ein außerhalb des Innenraums angeordnetes Steuermodul mit einer Ventileinrichtung und einer Regeleinrichtung. Mit diesem Positioniermodul ist es nun vorteilhafterweise möglich, eine vorgegebene Balghöhe H der Luftfeder bzw. des diese verkörpernden Balgzylinders mittels der Regeleinrichtung über den vom analogen Näherungssensor ständig gemessenen aktuellen Abstand H zwischen Näherungssensor und Metallplatte und dessen Vergleich mit einem Sollwert einzuhalten, wobei ggf. über die Ventileinrichtung, welche zweckmäßigerweise an eine Druckluftversorgung angeschlossen ist, die Balghöhe nachgeregelt wird.

Die Aufgabe wird weiter gelöst mit einer Positionsregeleinrichtung gemäß Anspruch 4.

Die erfindungsgemäße Positionsregeleinrichtung ist gekennzeichnet durch eine Vielzahl von Positioniermodulen gemäß Anspruch 3, welche zwischen einer Basisplattform und einer Positionierplatte angeordnet sind. Diese Einrichtung ermöglicht es, auf der Positionierplatte wandernde bzw. sich ändernde Belastungen oder Lastwechsel auszugleichen und zu Nachregeln der Höhen H der Positioniermodule kompensieren und damit z. B. eine Maschine, einen Tisch oder eine Plattform etc. kontinuierlich auf gleichem Niveau bzw. in der Waage zu halten.

Schließlich wird die Aufgabe wird weiter gelöst mit einem Schwingungsisolator gemäß Anspruch 5.

Der erfindungsgemäße Schwingungsisolator, mit einem Positioniermodul gemäß Anspruch 3, ist dadurch gekennzeichnet, dass neben dem Innenraum der Luftfeder eine Dämpfungskammer angeordnet ist, welche über einen mit einer Drossel versehenen Verbindungskanal mit dem Innenraum der Luftfeder kommuniziert. Dieser Schwingungsisolator kann vorteilhafterweise für hochwirksame Schwingungsisolierung von empfindlichen Meise- und Prüfmaschinen, Feinbearbeitungsmaschinen sowie optischen und elektronischen Geräten eingesetzt werden. Er biete sich u.a. auch besonders für die schwingungsisolierte Lagerung von Fahrzeug-, Motoren- und Getriebeprüfständen an.

Zum besseren Verständnis der Erfindung wird diese anhand von Ausführungsbeispielen im Folgenden kurz beschrieben.
- Fig.1: zeigt schematisch im Schnitt ein Positioniermodul mit einer Luftfeder bzw. einem Balgzylinder mit integriertem kontaktlosen Höhensensor.
- Fig. 2: zeigt schematisch einen Schaltplan für einen in Fig. 1 symbolisch gezeigten Elektromagnetblock des Positioniermoduls.
- Fig. 3: zeigt schematisch im Schnitt einen Schwingungsisolator gemäß der Erfindung.
- Fig. 4: zeigt schematisch eine Positioniereinrichtung von der Seite.
- Fig. 5: zeigt schematisch die Positioniereinrichtung nach Fig. 4 von oben.

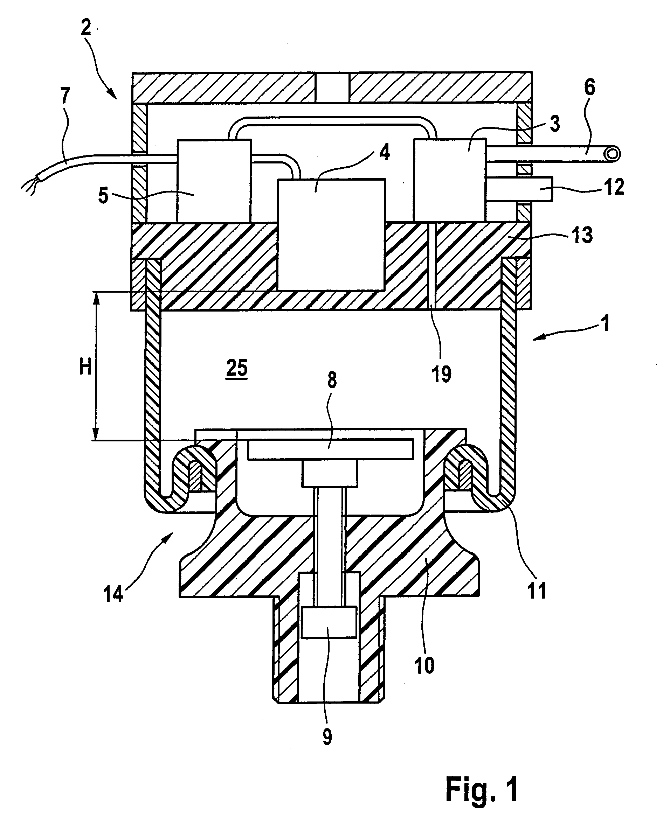

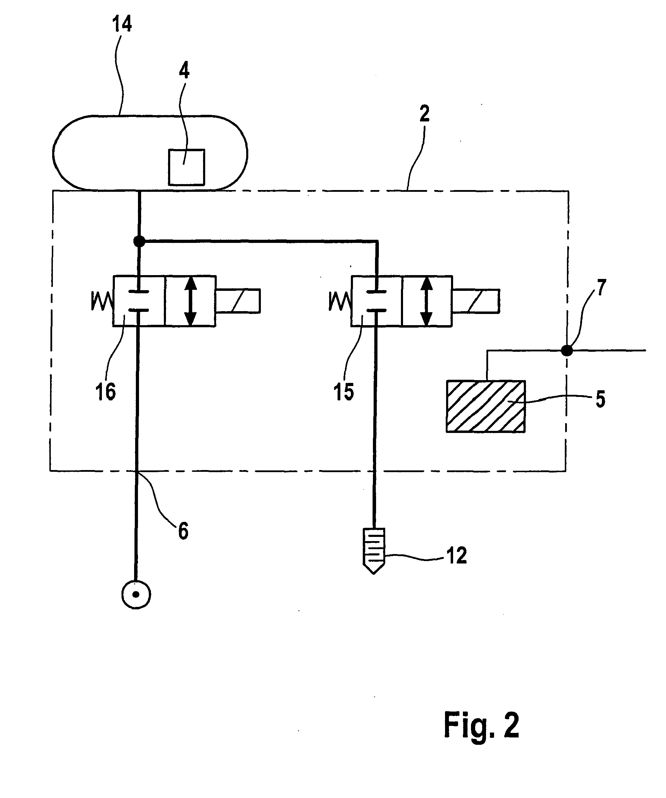

Fig. 1 zeigt schematisch im Schnitt ein Positioniermodul 1 mit einer Luftfeder bzw. einem Balgzylinder 14 mit integriertem kontaktlosen Höhensensor 4. In einem Kunststoffdeckel 13 eines Steuermoduls 2 ist ein handelsüblicher analoger Näherungssensor 4 eingesetzt, der mit einer im Balgzylinder gegenüber angeordneten Metallplatte 8 den kontaktlosen Höhensensor bildet. Die Metallplatte 8 ist über eine Verschraubung 9 im Boden 10 voreinstellbar angeordnet. An dem Deckel 13 sind weiter ein Elektromagnetventilblock (EMVB) 3 und eine Regelelektronik 5 angeordnet. Durch Ein- und Ausschalten von im EMVB 3 angeordneten Magnetventilen 15, 16 (Fig. 2) kann der Balgzylinder 14 mit Druckluft befüllt oder entleert werden. Dabei verändert sind der Abstand H zwischen Näherungssensor 4 und Metallplatte 8, was automatisch der Hubhöhe des Balgzylinders 4 entspricht. Durch die Ausbildung des Deckels 13 aus Kunststoff wird der Näherungssensor 4 einerseits geschützt, andererseits kann der Sensor durch das Kunststoffmaterial hindurch ungehindert den Abstand zur Metallplatte 8 abtasten.

Im Steuermodul 2 befinden sich neben dem Näherungssensor 4 und dem EMVB 3 noch ein Druckluftanschluss 6, sowie eine Entlüftung (Schalldämpfer 12, siehe Fig. 2) und Signal- und Energieleitungen zur Versorgung und für die Kommunikation nach außen.

Die Regelelektronik 5 ist so programmiert, dass der Höhensensor 4 die vorgegebene Balgzylinderhöhe H ständig überwacht. Weicht der Istwert vom Sollwert ab, wird über die Steuerung der Magnetventile 15, 16 durch Druckluftzugabe oder -abzug über einen Kanal 19 in den Innenraum des Balgzylinders 4 nachgeregelt. eine (nicht gezeigte) zentrale Steuerung gibt den Sollwert für die Balgzylinderhöhe vor. Es ist von Vorteil, das Steuermodul 2 als Baugruppe auszuführen, sitze nur über einen Druckluftanschluss 6, eine Entlüftung über den Schalldämpfer 12 und eine elektrische Verbindung über eine Leitung 7 für die Energieversorgung und Kommunikation Anschlüsse nach außen vorliegen.

Fig. 2 zeigt schematisch einen Schaltplan für einen in Fig. 1 symbolisch gezeigten EMVB 3 des Steuermoduls 2 des Positioniermoduls 1. Die beiden Magnetventile 15 und 16 sorgen für Druckluftzugabe oder -abzug. Im stromlosen Zustand der Elektromagnetventile 15, 16 befindet sich der Balgzylinder 14 im Zustand "Position halten". Bei Einschalten von Elektromagnetventilen 16 (geschieht dann, wenn der Sollwert sich nach unten geändert hat und sich aufgrund der Änderung des vom Näherungsschalter 4 kommenden Analogsignals) strömt Druckluft in den Balgzylinder 14 ein. Bei Erreichen der vorgegebenen Sollwerthöhe für den Balgzylinder 14 wird das Elektromagnetventil 16 von der Regelelektronik 5 wieder ausgeschaltet und die Druckluftzufuhr unterbrochen. Um (wiederum aufgrund eines Steuersignals "Senken") die Höhe des Balgzylinders 14 zu verringern wird das Elektromagnetventil 15 eingeschaltet, und über den Kanal 19 und den Schalldämpfer 12 strömt die Druckluft in die Atmosphäre ab, bis der Sollwert H wieder erreicht ist. Durch entsprechendes Schalten der Elektromagnetventile 15 und 16 ergeben sich für das Positioniermodul also drei Schaltzustände "Halten", "Heben" und "Senken". Bei Einsatz von direkt gesteuerten Elektromagnetventilen werden sehr kurze Schalt- und damit Höhenkorrekturzeiten erreicht.

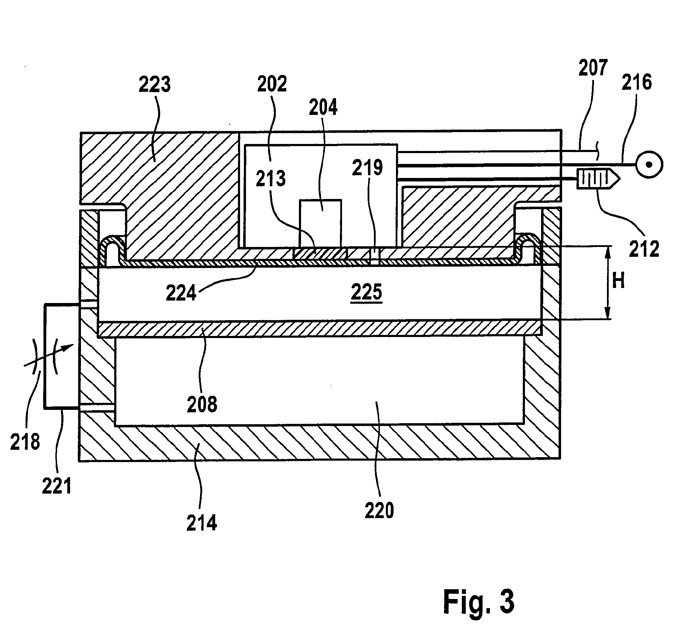

Fig. 3 zeigt schematisch im Schnitt einen Schwingungsisolator 214 mit einem Steuermodul 202, einem Kunststoffdeckel 213 und einem Näherungssensor 204, wobei neben dem Innenraum der Luftfeder eine Dämpfungskammer 220 angeordnet ist, welche über einen mit einer Drossel 218 versehenen Verbindungskanal 221 mit dem Innenraum 225 der Luftfeder kommuniziert. Man erkennt aus der Darstellung gemäß Fig. 3, dass sich der Deckel 223 des Schwingungsisolator 214 nur noch heben kann, wobei sich der Wulst des Balgzylinders 224 nach oben abwickelt. Auf der Stirnseite des Näherungssensors 204 ist eine Kunststoffplatte 213 angeordnet, welche im Deckel 223 eingebettet ist. Das Schaltprinzip für den Schwingungsisolator 214 funktioniert analog zu dem Schaltprinzip des oben beschriebenen Positioniermoduls 1, wobei die Bezugszeichen von Fig. 3 gegenüber den von Fig. 1 und 2 jeweils um den Wert 200 erhöht sind.

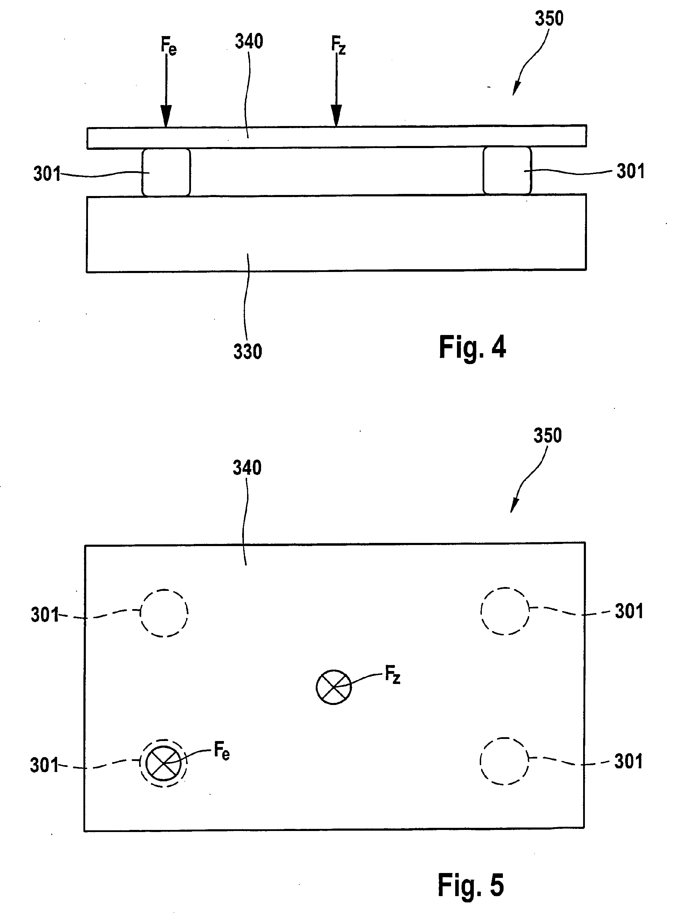

Fig. 4 zeigt schematisch eine Positioniereinrichtung 350 von der Seite. Vier Positioniermodule 301, welche auf einer Basisplattform 330 angeordnet sind, tragen eine Positionierplatte 340. Im Idealfall wirkt eine Zentralkraft Fz mittig auf die Positionierplatte 340. Dann ist eine nur eine gleichmäßige Niveauanpassung erforderlich. Bei Belastung der Positionierplatte 340 der Positioniereinrichtung 350 durch eine exzentrische Kraft Fe wird eine Niveauanpassung durch individuelle Regelung aller vier Positioniermodule 301 erforderlich. Der Ablauf geschieht analog zu den bisher beschriebenen Ausführungsbeispielen.

Fig. 5 zeigt die Positioniereinrichtung 350 nach Fig. 4 von oben gesehen. Hierbei kann man die Lage der Angriffspunkte der Kräfte Fz und Fe erkennen.

## Patentansprüche

1. Luftfeder mit integrierter Höhenmesseinrichtung, **gekennzeichnet durch** einen Druckraum oder Innenraum (25) der Luftfeder, einen außerhalb des Innenraums (25) angeordneten jedoch in den Innenraum (25) ausgerichteten analogen Näherungssensor (4) und eine im Innenraum (25) dem Näherungssensor (4) gegenüber angeordnete Metallplatte (8).

2. Luftfeder nach Anspruch 1, **dadurch gekennzeichnet, dass** der analoge Näherungssensor (4) und die Metallplatte (8) im Abstand zueinander voreinstellbar ausgebildet sind.

3. Positioniermodul, **gekennzeichnet durch**
a) eine Luftfeder (14) gemäß Anspruch 1 oder 2,
b) ein außerhalb des Innenraums (25) angeordnetes Steuermodul (2) mit
ba) einer Ventileinrichtung (3) und
bb) einer Regeleinrichtung (5).

4. Positionsregeleinrichtung, **gekennzeichnet durch** eine Vielzahl von Positioniermodulen (301) gemäß Anspruch 3, welche zwischen einer Basisplattform (330) und einer Positionierplatte (340) angeordnet sind.

5. Schwingungsisolator, mit einem Positioniermodul gemäß Anspruch 3, **dadurch gekennzeichnet, dass** neben dem Innenraum der Luftfeder (214) eine Dämpfungskammer (220) angeordnet ist, welche über einen mit einer Drossel (218) versehenen Verbindungskanal (221) mit dem Innenraum der Luftfeder (214) kommuniziert.
